(19) Europäisches Patentamt
European Patent Office
Office européen des brevets

(11) EP 1 366 896 B1

(12) EUROPÄISCHE PATENTSCHRIFT

(45) Veröffentlichungstag und Bekanntmachung des Hinweises auf die Patenterteilung:
**02.02.2005 Patentblatt 2005/05**

(51) Int Cl.$^7$: **B32B 27/36**, B32B 27/32, B32B 27/08, B29C 55/12

(21) Anmeldenummer: **03011069.6**

(22) Anmeldetag: **20.05.2003**

(54) **Transparente Polyesterfolie mit verbesserter Wasserdampfbarriere, Verfahren zu ihrer Herstellung und ihre Verwendung**

Transparent polyester film with improved barrier to water vapour, method of preparation and usage

Feuille en polyester transparente à barrière améliorée contre la vapeur d'eau, son procédé de préparation et son utilisation

(84) Benannte Vertragsstaaten:
**DE FR GB IT LU**

(30) Priorität: **28.05.2002 DE 10223662**

(43) Veröffentlichungstag der Anmeldung:
**03.12.2003 Patentblatt 2003/49**

(73) Patentinhaber: **Mitsubishi Polyester Film GmbH
65203 Wiesbaden (DE)**

(72) Erfinder:
- **Pfeiffer, Herbert, Dr. Prof.
55126 Mainz (DE)**
- **Hilkert, Gottfried, Dr.
55291 Saulheim (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**DE-A- 10 042 329**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 366 896 B1

Printed by Jouve, 75001 PARIS (FR)

## Beschreibung

Die Erfindung betrifft eine mehrschichtige, transparente, biaxial orientierte Polyesterfolie mit einer Basisschicht B und mindestens einer Deckschicht A. Die Folie enthält Cycloolefincopolymere (COC) mit niedriger Glasübergangstemperatur. Die Erfindung betrifft weiterhin ein Verfahren zur Herstellung der Folie und ihre Verwendung.

Transparente, biaxial orientierte Polyesterfolien, die sich durch verbesserte Barriereeigenschaften auszeichnen, sind nach dem Stand der Technik bekannt. In nahezu allen Fällen erhalten die Folien ihre verbesserten Barriereeigenschaften off line, nach der eigentlichen Herstellung durch einen zusätzlichen Verarbeitungsschritt. Beispiele für solche Nachbehandlungen sind die Extrusionsbeschichtung, die Beschichtung oder Laminierung mit Barrierematerialien, die Beschichtung im Vakuum mit Metallen oder mit keramischen Substanzen oder die Plasmapolymerisation in Verbindung mit der Vakuumbeschichtung.

Eine Ausnahme hiervon bildet das in der WO 99/62694 näher beschriebene Verfahren, bei dem eine mehrschichtige, koextrudierte Polyesterfolie, die mindestens eine Schicht aus EVOH (Ethylen-Vinyl-Alkohol) enthält, simultan biaxial verstreckt wird. Die resultierende Folie zeichnet sich durch gute mechanische Eigenschaften und gute Barriereeigenschaften aus. Mit der Folie wird eine Säuerstoffdurchlässigkeit OTR (engl. Oxygen Transmission Rate) erzielt, die nicht kleiner ist als 5 $cm^3/(m^2 \cdot bar \cdot d)$. Über die mit der Folie erzielte Wasserdampfdurchlässigkeit WVTR (engl. Water Vapor Transmission Rate) erhält man keine Auskunft. Nachteilig an diesem Verfahren ist, dass das anfallende Regenerat dem Herstellungsprozess nicht wieder zugeführt werden kann, ohne dass die dann resultierende Folie ihre guten optischen Eigenschaften verliert.

In der US-A 5,795,528 wird ein koextrudiertes Folienlaminat beschrieben, das alternierende Schichten aus PEN und PET aufweist. Das Folienlaminat weist eine erhöhte Barriere gegen Sauerstoff und Wasserdampf auf, neigt aber zum Delaminieren zwischen den einzelnen Schichten aus PEN und PET. Zwischen diesen Schichten besteht so gut wie keine Haftung. Ein solches Laminat ist damit für eine praktische Verwendung nicht geeignet.

In der US-A 5,912,070 wird ein koextrudiertes Folienlaminat beschrieben, welches gegenüber Temperatur und Stoß resistent ist, eine Barriere gegenüber Wasserdampf zeigt und mittels Hand zerreißbar ist. Die Folie besteht aus einer oder mehreren Lagen eines thermoplastischen Polyesterrohstoffes (A), einer oder mehreren Lagen eines Harzes basierend auf Cycloolefin-Polymeren (C) und einer oder mehreren dazwischenliegenden Schichten eines Haftvermittlers (B). Das Cycloolefin Polymere der Schicht (C) zeichnet sich durch eine Glasübergängstemperatur von 60 bis 120 °C aus und kann sowohl nach dem Ringöffnungsverfahren als auch über Metallocenkatalysatoren hergestelltworden sein. Die Haftvermittlerschicht (B) befindet sich dabei zwischen den beiden Schichten (A) und (C). Als Haftvermittler werden eine Reihe bekannter Polymere genannt, wobei unter den bevorzugten Polymeren pfropfmodifizierte statistische Copolymere auf Basis von Ethylen und $\alpha$-Olefinen aufgeführt werden. Die Pfropfmodifizierung dieser Copolymere wird z.B. durchgeführt mit ungesättigten Dicarbonsäuren oder mit deren Derivaten. In einer bevorzugten Ausführungsform wird die Folie biaxial orientiert. Nachteilig an der Folie ist ihr komplexer Aufbau und der damit verbundene hohe technische Aufwand, der zu ihrer Herstellung betrieben werden muss. Insbesondere von Nachteil ist diese Problematik bei einer Wiederverwendung des anfallenden Folienverschnitts. Der Folienverschnitt kann auf Grund der vielen verschiedenartigen Polymere für die drei unterschiedlichen Schichten nicht mehr als Regenerat, z.B. für die Basisschicht (A), wiederverwendet werden, da er in der Regel zu einer unzulässig hohen Gelbfärbung der resultierenden Folie führt.

EP-A-1 068 949 betrifft eine weiße, biaxial orientierte Polyesterfolie mit mindestens einer Basisschicht, deren kennzeichnende Merkmale darin bestehen, dass zumindest diese Basisschicht ein Cycloolefincopolymeres (COC) in einer Konzentration von 2 bis 60 Gew.-%, bezogen auf die Basisschicht enthält, wobei die Glasübergangstemperatur des Cycloolefincopolymeren (COC) im Bereich von 70 bis 270 °C liegt. Die Glasübergangstemperatur des COCs und die Strecktemperaturen sind so gewählt, dass eine opak - weiße Folie mit niedriger Dichte erhalten wird. Die Folie zeichnet sich nicht durch verbesserte Barrierewerte gegenüber Wasserdampf aus. Besitzt beispielsweise eine 23 µm dicke, transparente Standardpolyesterfolie, die kein COC enthält, eine WVTR von 21 $g/(m^2 \cdot d)$, so ergibt sich für eine Folie nach EP-A-1 068 949, Beispiel 1 (10% COC), eine WVTR von ca. 27$g/(m^2 \cdot d)$.

Aufgabe der vorliegenden Erfindung war es deshalb, eine Polyesterfolie zur Verfügung zu stellen, die sich durch verbesserte Barriereeigenschaften auszeichnet, insbesondere gegenüber dem Durchtritt von Wasserdampf. Eine solche Folie sollte die Nachteile der Folien aus dem Stand der Technik nicht aufweisen und sich weiterhin dadurch auszeichnen, dass bei der Herstellung der Folie gewährleistet ist, dass das anfallende Regenerat wieder der Extrusion zugeführt werden kann, ohne dass dabei die physikalischen und optischen Eigenschaften der resultierenden Folie, insbesondere aber die Barriere gegenüber Wasserdampf, nennenswert negativ beeinflusst werden. Eine gute Haftung zwischen den einzelnen Schichten einer coextrudierten Folie muss für deren praktische Anwendung ebenfalls gewährleistet sein.

Andererseits sollten sich gleichzeitig die anderen, eine Polyesterfolie auszeichnenden Eigenschaften nicht verschlechtern. Hierzu gehören beispielsweise die mechanischen und die thermischen Eigenschaften, das Wickelverhalten und die Verarbeitbarkeit der Folie, insbesondere bei einer nachfolgenden Bedruckung, Kaschierung oder einer

Beschichtung mit metallischen oder keramischen Materialien.

Gelöst wird diese Aufgabe durch eine mehrschichtige, transparente, biaxial orientierte Polyesterfolie, welche eine Basisschicht B, die mindestens zu 50 Gew.-% aus einem thermoplastischen Polyester besteht, und mindestens eine Deckschicht A aufweist, dadurch gekennzeichnet, dass

a) die Basisschicht B ein Cyloolefincopolymer (COC) in einem Anteil von 0 bis 30 Gew.-% enthält,
b) die Deckschicht A ein Cyloolefincopolymer (COC) in einem Anteil von 20 bis 100 Gew.-% enthält,
c) die Glasübergangstemperatur des Cycloolefincopolymeren $T_g$ kleiner als 120°C ist und
d) der Permeationskoeffizient für Wasserdampf der Folie kleiner als 35 g [12 µm]/$m^2$·d ist.

d bedeutet Tag.

Die biaxial orientierte, transparente Polyesterfolie nach der vorliegenden Erfindung weist eine gegenüber Folien nach dem Stand der Technik deutlich verringerte Wasserdampfdurchlässigkeit auf. Dabei ist eine Mindesthaftung zwischen den einzelnen Schichten der Folie von größer als 0,5 N/25 mm gewährleistet.

Die o.g. Werte für Zusammensetzung und physikalische Parameter sind bevorzugte Werte, bei denen die gewünschten Eigenschaften der erfindungsgemäßen Folie besonders ausgeprägt sind.

Die erfindungsgemäße Folie ist zumindest zweischichtig aufgebaut. Sie besteht dann aus einer Basisschicht B und einer Deckschicht A.

Die Gew.-%-Angaben beziehen sich jeweils auf das Gesamtgewicht der entsprechenden Schicht.

Die Basisschicht der Folie besteht bevorzugt zu mindestens 60 Gew.-%, bezogen auf das Gewicht der Basisschicht B, aus einem thermoplastischen Polyester. Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt zu mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. Dicarbonsäuren. Geeignete thermoplastische Polyester für die Basisschicht B können auch Polyestercopolymere oder Blends auf Basis von Polyester sein, insbesondere solche, die als Komponente II für die Deckschicht A näher beschrieben werden.

Geeignete weitere aliphatische Diole als Polyesterkomponente sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4OH$, wobei X bevorzugt für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Geeignete weitere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der thermoplastischen Polyester kann z. B. nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält die Basisschicht B ein Cycloolefincopolymeres COC in einer Menge von 0 bis 30 Gew.-%, bezogen auf das Gewicht der Basisschicht. Bevorzugt sind 2 bis 25 Gew.-% und besonders bevorzugt 5 bis 20 Gew.-%.

Die nachfolgend in bezug auf die Deckschicht A beschriebenen Eigenschaften der dort enthaltenen COCs gelten auch in bezug auf die COCs der Basisschicht. Grundsätzlich können die in der Basisschicht und in den Deckschichten enthaltenen COCs gleich oder verschieden sein.

Erfindungsgemäß enthält die Deckschicht A ein Cycloolefincopolymeres COC (= Komponente I) in einer Menge von 20 bis 100 Gew.-%, bevorzugt in einer Menge von 25 bis 95 Gew.-% und besonders bevorzugt in einer Menge

von 30 bis 90 Gew.-%, bezogen auf das Gewicht der Deckschicht A. Bei einem Gewichtsanteil des COC's von kleiner als 20 % ist der positive Effekt auf die Wasserdampfbarriere meist unzureichend.

Es ist für die vorliegende Erfindung wesentlich, dass das Cycloolefincopolymere COC so ausgewählt wird, dass es mit den weiteren Komponenten der Deckschicht A und mit denen der anderen Schichten B und gegebenenfalls C gemeinsam verstreckt werden kann, ohne dass hierbei nennenswert Vakuolen gebildet werden. Diese tragen zur Verschlechterung der Barriereeigenschaften bei und würden gleichzeitig die optischen Eigenschaften der Folie nachhaltig negativ beeinflussen.

Ein für die vorliegende Erfindung wesentliches Auswahlkriterium für das Cycloolefincopolymere ist die Glasübergangstemperatur $T_g$, die erfindungsgemäß kleiner als 120 °C sein muss, bevorzugt kleiner als 100 °C und besonders bevorzugt kleiner als 80 °C sein sollte. Wird ein Cycloolefincopolymeres mit einer größeren Glasübergangstemperatur als 120 °C in der Deckschicht verwendet, ist oft nicht mehr gewährleistet, dass sich das Cycloolefincopolymere gemeinsam mit den anderen Polyesterpolymeren der Folie verstrecken lässt. In diesem Fall separiert sich das Cycloolefincopolymere bei der biaxialen Streckung von den anderen Polymeren und es bilden sich Vakuolen, die unerwünscht sind.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50 bis 95 Gew.-%, jeweils bezogen auf die Gesamtmasse des Cycloolefinpolymeren, polymerisierte Cycloolefineinheiten enthalten. Bevorzugt sind insbesondere Polymere, die aus den cyclischen Olefinen der Formeln I, II, III, IV, V oder VI aufgebaut sind:

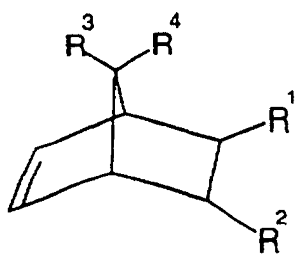
(I)

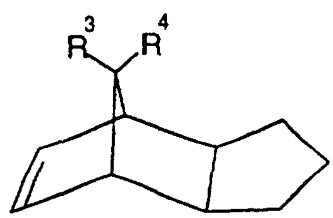
(II)

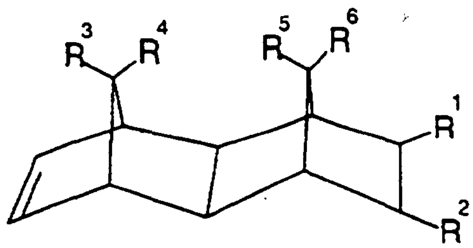
(III)

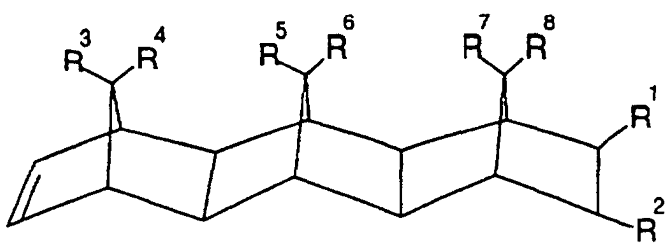
(IV)

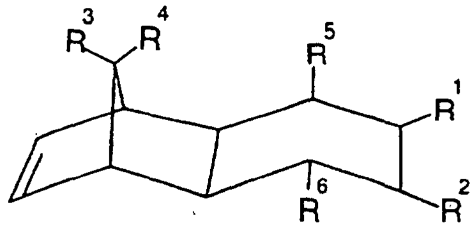

(V)

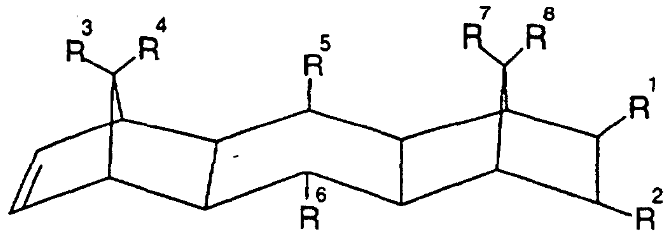

(VI)

In diesen Formeln sind $R^1$, $R^2$, $R^3$, $R^4$, $R^5$, $R^6$, $R^7$ und $R^8$ gleich oder verschieden und bedeuten unabhängig voneinander ein Wasserstoffatom oder einen $C_1$-$C_{30}$-Kohlenwasserstoffrest; oder zwei oder mehrere der Reste $R^1$ bis $R^8$ sind cyclisch miteinander verbunden, wobei gleiche Reste in den verschiedenen Formeln gleiche oder unterschiedliche Bedeutung haben können. Bevorzugte $C_1$-$C_{30}$-Kohlenwasserstoffreste sind beispielsweise lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Die Cycloolefinpolymere können 0 bis bevorzugt 45 Gew.-%, bezogen auf die Gesamtmasse des Cycloolefinpolymeren, polymerisierte Einheiten mindestens eines monocyclischen Olefins der Formel VII enthalten:

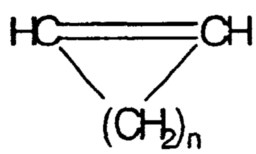

(VII)

Hierin ist n bevorzugt eine Zahl von 2 bis 10.

Weiterhin können die Cycloolefinpolymere 0 bis 99 Gew.-%, bezogen auf die Gesamtmasse des Cycloolefinpolymeren, polymerisierte Einheiten eines acyclischen Olefins der Formel VIII enthalten:

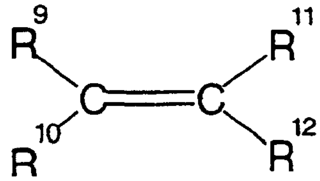

(VIII)

Hierin sind $R^9$, $R^{10}$, $R^{11}$, und $R^{12}$ gleich oder verschieden und bedeuten unabhängig voneinander ein Wasserstoffatom oder einen $C_1$-$C_{10}$-Kohlenwasserstoffrest, z.B. einen $C_1$-$C_8$-Alkylrest oder $C_6$-$C_{14}$-Arylrest.

Ebenfalls prinizipiell geeignet sind Cycloolefinpolymere, welche durch ringöffnende Polymerisation mindestens eines der Monomere der Formeln 1 bis VI und anschließende Hydrierung erhalten werden.

Cycloolefinhomopolymere sind aus einem Monomeren der Formeln I-VI aufgebaut. Diese Cycloolefin-Polymere oder Copolymere der Formeln I -VI mit VII sind für die Zwecke der vorliegenden Erfindung weniger geeignet.

Für die Zwecke der vorliegenden Erfindung sind insbesondere Cycloolefincopolymerisate (COC) geeignet, welche mindestens ein Cycloolefin der Formeln bis VI und mindestens ein acyclisches Olefin der Formel VIII als Comonomer enthalten. Im vorstehenden wie im nachfolgenden werden diese erfindungsgemäß bevorzugt verwendbaren Cycloolefincopolymerisate COC genannt. Dabei sind als acyclische Olefine VIII solche bevorzugt, die insgesamt 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen Cycloolefincopolymers.

Unter den vorstehend beschriebenen Cycloolefincopolymeren sind insbesondere diejenigen bevorzugt, die polymerisierte Einheiten polycyclischer Olefine mit Norbomengrundstruktur, besonders bevorzugt Norbornen oder Tetracyclododecen, enthalten. Besonders bevorzugt sind auch Cycloolefincopolymere (COC), die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% an Ethyleneinheiten enthalten (bezogen auf das Gewicht des Copolymeren).

Die vorstehend beschriebenen Cycloolefinpolymere weisen im allgemeinen Glasübergangstemperaturen zwischen -20 °C und 400 °C auf. Für die vorliegende Erfindung sind insbesondere Cycloolefincopolymerisate (COC) verwendbar, die eine Glasübergangstemperatur $T_g$ von kleiner als 120 °C, bevorzugt von kleiner als 100 °C und besonders bevorzugt von kleiner als 80 °C aufweisen. Die Viskositätszahl (Dekalin, 135 °C, DIN 53 728) liegt zweckmäßigerweise zwischen 0,1 und 200 ml/g, bevorzugt zwischen 50 und 150 ml/g.

Die Herstellung der Cycloolefincopolymere (COC) geschieht durch eine heterogene oder homogene Katalyse mit metallorganischen Verbindungen und ist in einer Vielzahl von Dokumenten beschrieben. Geeignete Katalysatorsysteme basierend auf Mischkatalysatoren aus Titan- bzw. Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Für die Folie gemäß der vorliegenden Erfindung wurden Cycloolefincopolymere (COC), die mittels Katalysatoren, die auf löslichen Metallocenkomplexen basieren, hergestellt wurden, in besonders bevorzugter Weise verwendet.

Die Cycloolefincopolymere werden entweder als reines Granulat oder als granuliertes Konzentrat (Masterbatch) in die Folie eingearbeitet. Das Polyestergranulat und evtl. weitere Komponenten werden dazu mit dem Cycloolefincopolymer (COC) bzw. dem Cycloolefincopolymer (COC)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Herstellungsverfahren zweckmäßig, dass die Extrusionstemperatur deutlich oberhalb der Glasübergangstemperatur $T_g$ des Cycloolefincopolymeren (COC) liegt, im allgemeinen mindestens 30 °C, vorzugsweise 40 bis 230 °C, insbesondere aber 50 bis 200 °C, über der Glasübergangstemperatur des Cycloolefincopolymeren (COC).

Die DeckschichtA der Folie nach der vorliegenden Erfindung enthält bevorzugt mindestens eine weitere Rohstoffkomponente (= Komponente II). Diese ist bevorzugt auf Basis von Polyesterrohstoffen aufgebaut. Diese additive (n) Komponente (n) können Homopolymere sein, wie zuvor für die Basisschicht B beschrieben, also z. B. PET oder PEN. In vorteilhafter Weise können für die Deckschicht A als weitere Komponenten auch Copolymere oder Mischungen oder Blends aus Homo- und/oder Copolymeren verwendet werden.

Besonders zweckmäßig ist, wenn in der Deckschicht A als Komponente II ein PolyesterCopolymer oder ein Polyesterblend auf Basis von Isophthalsäure und Terephthalsäure verwendet wird. In diesem Fall sind die optischen Eigenschaften der Folie, die Haftung zwischen den einzelnen Schichten und die erzielten Barriereeigenschaften der Folie gemäß der vorliegenden Erfindung besonders gut.

In diesem Fall enthält die Deckschicht A der erfindungsgemäßen Folie im wesentlichen als Komponente 1 das COC und als Komponente II ein Polyestercopolymeres oder ein Blend aus Polyester, das überwiegend oder vollständig aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester sowohl für die Basis- als auch für die Deckschichten, die die gewünschten Eigenschaften der Folie bereitstellen (Optik, Haftung, gemeinsame Verstreckbarkeit), sind solche, die aus Etylenterephthalat- und Ethylenisophthalat-Einheiten aufgebaut sind. Der Anteil an Ethylenterephthalat beträgt bevorzugt 40 bis 98 Mol-% und der entsprechende Anteil an Ethylenisophthalat 60 bis 2 Mol-%. Bevorzugt sind hierunter solche Copolyester, bei denen der Anteil an Ethylenterephthalat

50 bis 95 Mol-% und der entsprechende Anteil an Ethylenisophthalat 50 bis 5 Mol-% beträgt, und hierunter sind wiederum ganz besonders bevorzugt solche Copolyester, bei denen der Anteil an Ethylenterephthalat 60 bis 85 Mol-% und der entsprechende Anteil an Ethylenisophthalat 40 bis 15 Mol-% beträgt. Diese bevorzugten Copolyester enthalten neben Ethylenterephthalat und Ethylenisophthalat keine weiteren Einheiten.

Zur Bereitstellung einer Folie mit den erfindungsgemäßen Barrierewerten (bzw. Permeationskoeffizienten) für Wasserdampf und den erfindungsgemäßen Haftungswerten zwischen der Deckschschicht A und der Basisschicht B hat sich gezeigt, dass die Rohstoffzusammensetzung in Deck- und Basisschicht wie folgt auszuwählen ist:

Erfindungsgemäß enthält die Basisschicht B ein Cyloolefincopolymer (COC) in einem Anteil von 0 bis 30 Gew.-% und die Deckschicht A ein Cyloolefincopolymer (COC) in einem Anteil von 20 bis 100 Gew.-%.

Ist beispielsweise in der Deckschicht A der Cycloolefincopolymeranteil hoch, z.B. über 80 Gew.-%, so sollte, zur sicheren Erzielung einer Mindesthaftung von 0,5 N/25 mm zwischen den beiden Schichten A und B, in der Basisschicht B der Cyloolefincopolymeranteil über 15 Gew.-% liegen.

Enthält andererseits die Deckschicht A ein Cyloolefincopolymer in einem Anteil von weniger als 60 Gew.-%, so braucht zur Bereitstellung einer Mindesthaftung von 0,5 N/25 mm zwischen den beiden Schichten A und B in der Basisschicht B kein Cyloolefincopolymer eingesetzt werden.

Diese Angaben sind Orientierungswerte, die für einen gegebenen Fall das Auffinden der geeigneten Folienzusammensetzung zusätzlich erleichtern.

In einer bevorzugten Ausführungsform der Erfindung sind 0,1 bis 25 Gew.-% der Polymere der Basisschicht B identisch mit denen der Deckschicht A. Diese werden der Basisschicht B entweder direkt bei der Extrusion beigemischt oder sind automatisch in der Folie durch Regeneratzugabe enthalten.

Die Dicke der Deckschicht A ist in der Regel größer als 1,0 μm und liegt bevorzugt im Bereich von 1,5 bis 20 μm und besonders bevorzugt im Bereich von 2,0 bis 10 μm.

Die Polyesterfolie nach der vorliegenden Erfindung kann in einer weiteren bevorzugten Ausführungsform noch eine zweite Deckschicht C enthalten. Aufbau, Dicke und chemische Zusammensetzung der zweiten Deckschicht C können unabhängig von der bereits vorhandenen Deckschicht A gewählt werden, wobei die zweite Deckschicht C ebenfalls die bereits genannten Polymeren oder Polymermischungen enthalten kann, welche aber nicht notwendig mit den Polymeren für die erste Deckschicht A identisch sein müssen. Die zweite Deckschicht C kann auch andere gängige Deckschichtpolymere enthalten. Der Schichtaufbau dieser Folie ist dann A-B-C.

Die Basisschicht B und/oder die Deckschichten können zusätzlich übliche Additive, wie z. B. Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren Antiblockmitteln oder Mischungen von Antiblockmitteln gleicher Zusammensetzung aber unterschiedlicher Partikelgröße gewählt werden. Die Partikel können den einzelnen Schichten in den üblichen Konzentrationen, z. B. als glykolische Dispersion während der Polykondensation oder über Masterbatche bei der Extrusion zugegeben werden. Als vorteilhaft haben sich Pigmentkonzentrationen in den Schichten von 0,0001 bis 5 Gew.-% erwiesen. Eine detaillierte Beschreibung der Antiblockmittel findet sich beispielsweise in der EP-A-0 602 964.

Die Dicke der Deckschicht C ist im allgemeinen größer als 0,5 μm und liegt vorzugsweise im Bereich von 0,5 bis 5 μm, insbesondere 0,7 bis 4 μm, wobei die Deckschichten A und C gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt meist 6 bis 300 μm, vorzugsweise 8 bis 200 μm, besonders bevorzugt 10 bis 100 μm, wobei die Basisschicht B einen Anteil von vorzugsweise 40 bis 95 % an der Gesamtdicke hat.

Gegenstand der vorliegenden Erfindung ist auch ein Verfahren zur Herstellung der erfindungsgemäßen Folien. Zur Herstellung der Deckschicht A werden zweckmäßiger Weise die jeweiligen Komponenten (Komponente I = COC-Granulat, Komponente II = Polyesterhomo- oder Polyestercopolymeres oder Mischungen hiervon, eventuell weitere Polymere) direkt dem Extruder zugeführt. Die Materialien lassen sich bei etwa 300 °C extrudieren. Aus verfahrenstechnischer Sicht (Durchmischung der vergleichsweise sehr unterschiedlichen Polymere, Klebeneigung der Cycloolefincopolymere an metallischen Wänden, da die Glasübergangstemperatur kleiner als 120 °C ist) hat es sich dabei als besonders günstig erwiesen, die Extrusion zumindest der Polymere für die Deckschicht A auf einem Zweischneckenextruder mit Entgasungsmöglichkeit(en) durchzuführen.

Die Polymere oder das Polymer für die Basisschicht B werden zweckmäßig über einen weiteren Extruder zugeführt (auch hier ist aus prinzipiellen Erwägungen der Zweischneckenextruder dem Einschneckenextruder vorzuziehen). Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Streckung wird im allgemeinen sequentiell durchgeführt. Dabei wird vorzugsweise erst in Längsrichtung, d.h. in Maschinenrichtung, und anschließend in Querrichtung, d.h. senkrecht zur Maschinenrichtung, gestreckt. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen.

Die Temperatur, bei der die Streckung durchgeführt wird, kann in einem relativ großen Bereich variieren und richtet sich nach den gewünschten Eigenschaften der Folie. Im allgemeinen wird die Streckung in Längsrichtung in einem Temperaturbereich von 80 (Aufheiztemperatur 80 bis 130 °C) bis 130 °C (Strecktemperatur 80-130 °C, abhängig vom Streckwerk) und die Querstreckung in einem Temperaturbereich von 80 bis 140 °C durchgeführt. Das Längsstreckverhältnis liegt bevorzugt im Bereich von 2,0:1 bis 5,0:1, insbesondere von 2,3:1 bis 4,8:1. Das Querstreckverhältnis liegt allgemein im Bereich von 2,5:1 bis 5,0:1, bevorzugt von 2,8:1 bis 4,5:1.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb anfällt, als Regenerat in einer Menge von bis zu 60 Gew.-%, bevorzugt 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich neben einer Vielzahl weiterer Anwendungen hervorragend zum Verpacken von Nahrungs- und Genussmitteln. Die erfindungsgemäße Folie zeichnet sich durch hervorragende Barriereeigenschaften, insbesondere gegenüber Wasserdampf aus.

Die nachstehende. Tabelle (Tabelle 1) fasst die wichtigsten erfindungsgemäßen Folieneigenschaften noch einmal zusammen.

**Tabelle 1**

| | Erfindungsgemäßer Bereich | Bevorzugt | Besonders bevorzugt | Einheit | Messmethode |
|---|---|---|---|---|---|
| Deckschicht A | | | | | |
| Komponente I (= Cycloolefinisches Copolymer COC) | 20 bis 100 | 25 bis 95 | 30 bis 90 | Gew.-% | |
| Komponente II (= Polyesterhomo- und/oder Polyestercopolymeres) | 0 bis 80 | 5 bis 75 | 10 bis 70 | Gew.-% | |
| Glasübergangstemperatur des verwendeten COC | < 120 | < 100 | < 80 | °C | |
| Dicke der Deckschicht A | > 1,0 | > 2,0 | > 3,0 | µm | |
| Basisschicht B | | | | | |
| Cycloolefinisches Copolymer COC | 0 bis 30 | 2 bis 25 | 5 bis 20 | Gew.-% | |
| Glasübergangstemperatur des verwendeten COC | < 120 | < 100 | < 80 | °C | |
| Folieneigenschaften | | | | | |
| Permeationskoeffizient gegenüber Wasserdampf | < 35 | < 30 | < 25 | g [12 µm]/($m^2$· d) | DIN 53122, Teil 2, Klima B |
| Wasserdampfdurchlässigkeit (einer 12 µm dicken Folie) | < 35 | < 30 | < 25 | g/($m^2$·d) | DIN 53122, Teil 2, Klima B |
| Haftung zwischen den Schichten A/B | > 0,5 | > 1,0 | >1,5 | N/25 mm | intern |
| Trübung der Folie | < 20 | < 15 | < 10 | % | ASTM-D 1003-52 |

**Messmethoden**

Zur Charakterisierung der Rohstoffe und der Folien wurden die folgenden Methoden benutzt:

DIN= Deutsches Institut für Normung
ASTM = American Society for Testing and Materials

(1) Wasserdampfdurchlässigkeit (WVTR)

Die Messung der Wasserdampfdurchlässigkeit erfolgte mit einem Wasserdampfdurchlässigkeitsmessgerät WDDG der Fa. Brugger/München nach DIN 53122, Teil 2, Klima B (37,8 °C, 90 % relative Luftfeuchtigkeit auf einer Seite der Folie).

(2) Trübung

Die Trübung der Folie wurde in Anlehnung an ASTM-D 1003-52 bestimmt.

(3) SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV = [\eta] = 6{,}907 \cdot 10^{-4}\ SV\ (DCE) + 0{,}063096\ [dl/g]$$

(4) Glasübergangstemperaturen $T_g$

Die Glasübergangstemperaturen $T_g1$ und $T_g2$ wurden anhand von Folienproben mit Hilfe der DSC (Differential Scanning Calorimetry) bestimmt. Verwendet wurde ein Gerät DSC 1090 der Fa. DuPont. Die Aufheizgeschwindigkeit betrug 20 K/min und die Einwaage ca. 12 mg. Im ersten Aufheizvorgang wurde der Glasübergang $T_g1$ ermittelt. Die Proben zeigten vielfach eine Enthalpierelaxation (ein Peak) zu Beginn des stufenförmigen Glasübergangs. Als $T_g1$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet. Möglicherweise überdeckten die peakförmigen Enthalpierelaxationen die Feinstruktur der Stufe oder die Auflösung des Gerätes war für eine Auftrennung der kleinen, "verschmierten" Übergänge von orientierten, kristallinen Proben nicht ausreichend. Um die thermische Vorgeschichte zu eliminieren, wurden die Proben nach dem Aufheizen 5 Minuten bei 300°C gehalten und dann anschließend mit flüssigem Stickstoff abgeschreckt. Aus dem Thermogramm für das zweite Aufheizen wurde die Temperatur für den Glasübergang $T_g2$ als die Temperatur bei halber Stufenhöhe entnommen. Dies ist der erfindungsgemäße $T_g$-Wert.

(5) Haftung zwischen den Schichten

Das Folienmuster (300 mm längs 180 mm quer) gemäß der vorliegenden Erfindung wird vor dem Verkleben auf einen glatten Karton (200 mm längs 180 mm quer; ca. 400 $g/m^2$, gebleicht, Außenlagen gestrichen) gelegt, die überstehenden Folienenden sind auf die Rückseite umzuschlagen und mit Klebeband zu fixieren.

Die Verklebung der Folie gemäß der vorliegenden Erfindung mit einer Standardpolyesterfolie von 12 µm Dicke (z.B. Melinex 800) erfolgt mit einem Rakelgerät und Rakelstab Nr. 3 der Fa. Erichsen, Deutschland, wobei ca. 1,5 ml Klebstoff (Novacote NC 275+CA 12; Mischverhältnis: 4/1+ 7 Teile Ethylacetat) auf die Deckschicht A der Folie gemäß der vorliegenden Erfindung aufgetragen wird. Nach dem Auslüften des Lösemittels wird die Standardpolyesterfolie mit einer Metallrolle (Breite 200 mm, Durchmesser 90 mm, Masse 10 kg, nach DIN EN 20 535) auf die Deckschicht A der Folie gemäß der vorliegenden Erfindung aufkaschiert. Die Parameter der Kaschierung sind:

| | |
|---|---|
| Klebstoffmenge | 5+/-1 g/m2 |
| Lüften nach Auftrag des Klebers | 4 min +/- 15 s |
| Rakelstärke (Erichsen) | 3 |
| Geschwindigkeitsstufe des Rakels | ca. 133 mm/s |

(fortgesetzt)

| | |
|---|---|
| Aushärtzeit des Verbundes | 2h bei 70 °C in einem Umluftofen |

Mit einem 25+/- 1 mm Streifenschneider werden ca. 100 mm lange Proben entnommen. Hierbei sind ca. 50 mm Verbund und 50 mm unverklebte Einzellagen zum Fixieren/Einspannen des Prüfkörpers notwendig. Die Prüflinge sind mittels doppelseitigem Klebeband mit der Rückseite der Folie gemäß der vorliegenden Erfindung (Basisschicht B oder Deckschicht C) vollflächig auf einem Trägerblech zu fixieren. Die Platte mit dem aufgeklebten Verbund ist in die untere Spannbacke der Zugprüfmaschine einzuspannen. Der Klemmabstand beträgt 100 mm. Das nicht kaschierte Ende der Standard-Polyesterfolie ist so in die obere Spannbacke der Zugprüfmaschine (z.B. Instron, Zwick, Deutschland), einzuspannen, dass sich ein Schälwinkel von 180° ergibt. Angegeben wird die mittlere Schälkraft in N/25 mm gerundet auf eine Stelle nach dem Komma.

| | |
|---|---|
| Probenbreite | 25 mm |
| Vorkraft: | 0,1 N |
| Messlänge: | 25 mm |
| Abzugsgeschwindigkeit bis Vorkraft: | 25 mm/min |
| Vorweg: | 5 mm |
| Prüfweg: | 40 mm |
| Empfindlichkeit: | 0,01 N |
| Abzugsgeschwindigkeit: | 100 mm/min |

Das Messergebnis für die Schälkraft ist gleichzusetzen mit der minimalen Haftkraft zwischen den Schichten der erfindungsgemäßen Folie, da die Haftkraft zwischen dem Kleber und der Standardfolie deutlich größer ist.

**Beispiele**

Die folgenden Beispiele illustrieren die Erfindung. Die verwendeten Produkte (Marken und Herstellerfirma) sind jeweils nur einmal angegeben und beziehen sich dann auch auf die folgenden Beispiele.

Beispiel 1

Chips aus COC und Polyethylenterephthalat wurden in einem Mischungsverhältnis von 50:50 direkt dem Extruder (Zweischneckenextruder ZSK der Fa. Werner & Pfleiderer) für die Deckschicht A zugeführt. Dort wurden die beiden Materialien bei einer Temperatur von etwa 300 °C extrudiert. Die Schmelze wurde filtriert, in einer Mehrschichtdüse zu einem Flachfilm ausgeformt und als Deckschicht A der Basisschicht B überlagert. Der Mehrschichtfilm wurde über die Düsenlippe ausgestoßen und auf einer Kühlwalze verfestigt. Die Verweilzeit der Polymeren in der Extrusion betrug ca. 5 min.

Chips aus Polyethylenterephthalat wurden bei einer Temperatur von 160 °C auf eine Restfeuchte von weniger als 100 ppm getrocknet und dem Extruder für die Basisschicht B zugeführt.

Daneben wurden Chips aus Polyethylenterephthalat und Antiblockmittel ebenfalls bei 160 °C auf eine Restfeuchte von 100 ppm getrocknet und dem Extruder (Zweischneckenextruder ZSK der Fa. Werner & Pfleiderer) für die Deckschicht C zugeführt. Die Temperaturen im Extruder für die Deckschicht C waren dieselben wie die für den Coextruder A.

Die dreischichtige Folie ABC hatte eine Gesamtdicke von 23 µm. Die Deckschicht A hatte eine Dicke von 3,0 µm und die Deckschicht C eine Dicke von 1,0 µm.

Deckschicht A:

| | |
|---|---|
| 50 Gew.-% | COC (® Topas 8007 der Firma Ticona, Deutschland, mit einer $T_g$ von ca. 75 °C) |
| 50 Gew.-% | Polyethylenterephthalat mit einem SV-Wert von 800 |

Basisschicht B:

| | |
|---|---|
| 100 Gew.-% | Polyethylenterephthalat (4020 der Fa. KOSA/Offenbach) mit einem SV-Wert von 800 und |

Deckschicht C:

| Deckschicht A: | |
|---|---|
| 80 Gew.-%<br>20 Gew.-% | Polyethylenterephthalat mit einem SV-Wert von 800 und<br>Masterbatch aus 99,0 Gew.-% Polyethylenterephthalat und 1,0 Gew.-% Kieselsäurepartikel, die zu 50% eine mittlere Teilchengröße von 2,5 µm und zu 50% eine mittlere Teilchengröße von 0,4 µm hatten. |

Die einzelnen Verfahrensschritte waren:

| | | | |
|---|---|---|---|
| Extrusion | Temperaturen | Deckschicht A | 300 °C |
| | | Basisschicht B | 300 °C |
| | | Deckschicht C | 300 °C |
| Längsstreckung | Temperaturbereich:<br><br>Erste Aufheizwalze 85 °C<br>Streckwalze 130 °C | | 85-130 °C |
| | Längsstreckverhältnis | | 3,8:1 |
| Querstreckung | Temperaturbereich<br><br>Aufheizfelder 85 bis 95 °C<br>Streckfelder 110 bis 135 °C | | 85-135 °C |
| | Querstreckverhältnis | | 3,8:1 |
| Fixierung | Temperatur | | 230 °C |

Die Folie hatte die geforderte Wasserdampfdurchlässigkeit und die geforderte Haftung zwischen den Schichten A und B.

Beispiel 2

Wie in Beispiel 1 wurde durch Koextrusion eine dreischichtige Folie ABC mit einer Gesamtdicke von 23 µm hergestellt. Die Deckschicht A hatte jetzt eine Dicke von 4 µm. Die anderen Schichten wurden in der Zusammensetzung nicht geändert.

Deckschicht A:

| | |
|---|---|
| 50 Gew.-%<br>50 Gew.-% | COC (®Topas 8007 der Firma Ticona, Deutschland, mit einer $T_g$ von ca. 75 °C)<br>Polyethylenterephthalat mit einem SV-Wert von 800. |

Beispiel 3

Wie in Beispiel 1 wurde durch Koextrusion eine dreischichtige Folie ABC mit einer Gesamtdicke von 23 µm

hergestellt. Die Deckschicht A hatte eine Dicke von 4 µm. Gegenüber den vorherigen Beispielen wurde jetzt in der Deckschicht A als Komponente II 50 Gew.-% von einem amorphen Copolyester mit 78 Mol-% Ethylenterephthalat und 22 Mol-% Ethylenisophthalat (hergestellt über das Umesterungsverfahren mit Mn als Umesterungskatalysator, Mn-Konzentration: 100 ppm) verwendet. Die anderen Schichten wurden in der Zusammensetzung nicht geändert.

Deckschicht A:

| | |
|---|---|
| 50 Gew.-% | COC (®Topas 8007 der Firma Ticona mit einer $T_g$ von ca. 75 °C) |
| 50 Gew.-% | Polyester aus einem amorphen Copolyester mit 78 Mol-% Ethylenterephthalat und 22 Mol-% Ethylenisophthalat (hergestellt über das Umesterungsverfahren mit Mn als Umesterungskatalysator, Mn-Konzentration: 100 ppm). |

Beispiel 4

Wie in Beispiel 1 wurde durch Coextrusion eine dreischichtige Folie ABC mit einer Gesamtdicke von 23 µm hergestellt. Die Deckschicht A enthielt jetzt 70% COC der vorgenannten Glastemperatur von 75 °C. Ihre Dicke betrug weiterhin 3 µm. Die anderen Schichten wurden in der Zusammensetzung nicht geändert.

Deckschicht A:

| | |
|---|---|
| 70 Gew.-% | COC (®Topas 8007 der Firma Ticona mit einer $T_g$ von ca. 75 °C) |
| 30 Gew.-% | Polyethylenterephthalat mit einem SV-Wert von 800. |

Beispiel 5

Wie in Beispiel 1 wurde durch Coextrusion eine dreischichtige Folie ABC mit einer Gesamtdicke von 23 µm hergestellt. Deckschicht A enthielt jetzt 85 Gew.-% COC (®Topas 8007) und die Basisschicht 15 Gew.-% COC (® topas 8007). Die Dicke der Deckschicht betrug weiterhin 3 µm. Die Schicht C wurde in der Zusammensetzung nicht geändert.

Deckschicht A:

| | |
|---|---|
| 85 Gew.-% | COC (® Topas 8007 der Firma Ticona mit einer $T_g$ von ca. 75 °C) |
| 15 Gew.-% | Polyethylenterephthalat mit einem SV-Wert von 800 |

Basisschicht B:

| | |
|---|---|
| 85 Gew.-% | Polyethylenterephthalat (4020 von KOSA/Offenbach) mit einem SV-Wert von 800 und |
| 15 Gew.-% | COC (® Topas 8007 der Firma Ticona mit einer $T_g$ von ca. 75 °C) |

Beispiel 6

Wie in Beispiel 5 wurde durch Coextrusion eine dreischichtige Folie ABC hergestellt. Die Gesamtdicke der Folie betrug jetzt 12 µm. Deckschicht A enthielt 85 Gew.-% COC (® Topas 8007) und die Basis 15 Gew.-% COC (®Topas 8007). Die Dicke der Deckschicht betrug 4 µm. Die Schicht C wurde in der Zusammensetzung nicht geändert.

Die Verfahrensbedingungen in den Beispielen 2 bis 6 waren wie im Beispiel 1.

Vergleichsbeispiel VB1

Es wurde eine Folie entsprechend Beispiel 1 hergestellt. Die Deckschicht A enthielt in diesem Fall kein COC, sondern die Zusammensetzung von Deckschicht C.

Deckschicht C:

| | |
|---|---|
| 80 Gew.-% | Polyethylenterephthalat mit einem SV-Wert von 800 und |
| 20 Gew.-% | Masterbatch aus 99,0 Gew.-% Polyethylenterephthalat und 1,0 Gew.-% Kieselsäurepartikel, die zu 50% eine mittlere Teilchengröße von 2,5 µm und zu 50% eine mittlere Teilchengröße von 0,4 µm hatten. |

Vergleichsbeispiel VB2

Es wurde eine Folie entsprechend Beispiel 1 hergestellt. Das COC der Deckschicht A hatte in diesem Fall eine Glasübergangstemperatur von 150 °C.

Deckschicht A:

| | |
|---|---|
| 50 Gew.-% | COC (®Topas 6015 der Firma Ticona mit einer $T_g$ von ca. 150 °C) |
| 50 Gew.-% | Polyethylenterephthalat mit einem SV-Wert von 800 |

Die Eigenschaften der gemäß den Beispielen und den Vergleichsbeispielen hergestellten Folien sind in Tabelle 2 zusammengestellt.

**Tabelle 2**

| Bei-spiel | Folien-dicke | Folien-Aufbau | Schicht-dicken A/B/C | COC-Anteil in Deck-schicht A | COC-Anteil in Basis-schicht B | Glastem-peratur COC | Permeations-koeffizient-Wasserdampf | Wasserdampf-durchlässigkeit | Haftung zwischen den Schichten A und B | Trübung der Folie |
|---|---|---|---|---|---|---|---|---|---|---|
| | (µm) | | (µm) | (%) | (%) | $T_g$ | (g·12 µm/m²·d) | (g/m²·d) | (N/25 mm) | (%) |
| B 1 | 23 | ABC | 3/19/1 | 50 | 0 | 75 | 29 | 15 | 2,5 | 10 |
| B 2 | 23 | ABC | 4/18/1 | 50 | 0 | 75 | 23 | 12 | 2,4 | 11 |
| B 3 | 23 | ABC | 4/18/1 | 50 | 0 | 75 | 22 | 11 | 2,8 | 8 |
| B 4 | 23 | ABC | 3/19/1 | 70 | 0 | 75 | 23 | 12 | 1,6 | 10 |
| B 5 | 23 | ABC | 3/19/1 | 85 | 15 | 75 | 13 | 7 | 1,8 | 8 |
| B 6 | 12 | ABC | 4/7/1 | 85 | 15 | 75 | 14 | 14 | 1,8 | 6 |
| | | | | | | | | | | |
| VB 1 | 23 | ABC | 3/19/1 | 0 | 0 | | 42 | 22 | > 5 | 2,0 |
| VB 2 | 23 | ABC | 3/19/1 | 50 | 0 | 150 | 44 | 23 | 2,3 | 45 |

## Patentansprüche

1. Mehrschichtige, transparente, biaxial orientierte Polyesterfolie, welche eine Basisschicht B, die zu mindestens 50 Gew.-% aus einem thermoplastischen Polyester besteht, und mindestens eine Deckschicht A aufweist, **dadurch gekennzeichnet, dass**

    a) die Basisschicht B ein Cycloolefincopolymer (COC) in einem Anteil von 0 bis 30 Gew.-% enthält,
    b) die Deckschicht A ein Cycloolefincopolymer (COC) in einem Anteil von 20 bis 100 Gew.-% enthält,
    c) die Glasübergangstemperatur $T_g$ des Cycloolefincopolymeren (COC) kleiner als 120 °C ist und
    d) der Permeationskoeffizient für Wasserdampf der Folie kleiner als 35g · [12µm] / $m^2$ · dist.

2. Polyesterfolie nach Anspruch 1, **dadurch gekennzeichnet, dass** die Basisschicht B das COC in einem Anteil von 2 bis 25 Gew.-%, bevorzugt in einem Anteil von 5 bis 20 Gew.-%, enthält.

3. Polyesterfolie nach Anspruch 1 oder 2, **dadurch gekennzeichnet, dass** die Deckschicht A das COC in einem Anteil von 25 bis 95 Gew.-%, bevorzugt in einem Anteil von 30 bis 90 Gew.-%, enthält.

4. Polyesterfolie nach einem oder mehreren der Ansprüche 1 bis 3, **dadurch gekennzeichnet, dass** die Glasübergangstemperatur des COC kleiner als 100 °C, bevorzugt kleiner als 80 °C, ist.

5. Polyesterfolie nach einem oder mehreren der Ansprüche 1 bis 4, **dadurch gekennzeichnet, dass** das COC mindestens ein Cycloolefin und mindestens ein acyclisches Olefin als Comonomere enthält.

6. Polyesterfolie nach einem oder mehreren der Ansprüche 1 bis 5, **dadurch gekennzeichnet, dass** das COC als Cycloolefincomonomer Norbornen und/oder Tetracyclododecen und als acyclisches Comonomer Ethylen, Propylen und/oder Butylen enthält.

7. Polyesterfolie nach einem oder mehreren der Ansprüche 1 bis 6, **dadurch gekennzeichnet, dass** als thermoplastischer Polyester der Basisschicht B Polyesterhomo- und/oder Polyestercopolymere verwendet werden.

8. Polyesterfolie nach einem oder mehreren der Ansprüche 1 bis 7, **dadurch gekennzeichnet, dass** als thermoplastischer Polyester der Basisschicht B Polyethylenterephthalat und/oder Polyethylen-2,6-naphthalat verwendet wird.

9. Polyesterfolie nach einem oder mehreren der Ansprüche 1 bis 8, **dadurch gekennzeichnet, dass** die Deckschicht A neben dem COC ein Polyesterhomo- und/oder ein Polyestercopolymer enthält.

10. Polyesterfolie nach einem oder mehreren der Ansprüche 1 bis 9, **dadurch gekennzeichnet, dass** als Polyesterhomopolymer für die Deckschicht A Polyethylenterephthalat und/oder Polyethylen-2,6-naphthalat verwendet wird.

11. Polyesterfolie nach einem oder mehreren der Ansprüche 1 bis 10, **dadurch gekennzeichnet, dass** als Polyestercopolymer für die Deckschicht A ein Copolymer verwendet wird, das aus Ethylenterephthalat- und Ethylenisophthalat-Einheiten aufgebaut ist.

12. Polyesterfolie nach einem oder mehreren der Ansprüche 1 bis 11, **dadurch gekennzeichnet, dass** die Haftung zwischen der Deckschicht A und der Basisschicht B größer als 0,5 N / 25 mm ist.

13. Polyesterfolie nach einem oder mehreren der Ansprüche 1 bis 12, **dadurch gekennzeichnet, dass** sie einen Schichtaufbau ABC hat, wobei die Deckschichten A und C gleich oder verschieden sind.

14. Polyesterfolie nach einem oder mehreren der Ansprüche 1 bis 13, **dadurch gekennzeichnet, dass** sie eine Trübung von kleiner als 20 % aufweist.

15. Polyesterfolie nach einem oder mehreren der Ansprüche 1 bis 14, **dadurch gekennzeichnet, dass** die Basis- und/oder die Deckschichten zusätzliche Additive, wie Stabilisatoren und/oder Antiblockmittel, enthalten.

16. Verfahren zur Herstellung einer Polyesterfolie nach einem oder mehreren der Ansprüche 1 bis 15 umfassend die Schritte

a) Herstellen der Folie durch Koextrusion und Ausformen der Schmelzen zu flachen Schmelzfilmen,

b) biaxiales Strecken der Folie und

c) Thermofixieren der gestreckten Folie.

**17.** Verwendung einer Polyesterfolie nach einem oder mehreren der Ansprüche 1 bis 15 als Barrierefolie für Wasserdampf und zum Verpacken von Nahrungs- und Genussmitteln.

**Claims**

**1.** A multilayer, transparent, biaxially oriented polyester film which has a base layer B composed of at least 50% by weight of a thermoplastic polyester, and has at least one outer layer A, wherein

a) the base layer B comprises a cycloolefin copolymer (COC) in a proportion of from 0 to 30% by weight,
b) the outer layer A comprises a cycloolefin copolymer (COC) in a proportion of from 20 to 100% by weight,
c) the glass transition temperature $T_g$ of the cycloolefin copolymer (COC) is less than 120°C, and
d) the permeation coefficient of the film for water vapor is smaller than 35 g·[12 µm] /$m^2$·d.

**2.** The polyester film as claimed in claim 1, wherein the base layer B comprises the COC in a proportion of from 2 to 25% by weight, preferably in a proportion of from 5 to 20% by weight.

**3.** The polyester film as claimed in claim 1 or 2, wherein the outer layer A comprises the COC in a proportion of from 25 to 95% by weight, preferably in a proportion of from 30 to 90% by weight.

**4.** The polyester film as claimed in one or more of claims 1 to 3, wherein the glass transition temperature of the COC is less than 100°C, preferably less than 80°C.

**5.** The polyester film as claimed in one or more of claims 1 to 4, wherein the COC comprises at least one cycloolefin and at least one acyclic olefin as comonomer.

**6.** The polyester film as claimed in one or more of claims 1 to 5, wherein the COC contains, as cycloolefin comonomer, norbornene and/or tetracyclododecene, and, as acyclic comonomer, ethylene, propylene, and/or butylene.

**7.** The polyester film as claimed in one or more of claims 1 to 6, wherein polyester homo- and/or copolymers are used as thermoplastic polyester of the base layer B.

**8.** The polyester film as claimed in one or more of claims 1 to 7, wherein polyethylene terephthalate and/or polyethylene 2,6-naphthalate is used as thermoplastic polyester of the base layer B.

**9.** The polyester film as claimed in one or more of claims 1 to 8, wherein the outer layer A comprises, besides the COC, a polyester homo- and/or a polyester copolymer.

**10.** The polyester film as claimed in one or more of claims 1 to 9, wherein polyethylene terephthalate and/or polyethylene 2,6-naphthalate is used as polyester homopolymer for the outer layer A.

**11.** The polyester film as claimed in one or more of claims 1 to 10, wherein a copolymer composed of ethylene terephthalate units and of ethylene isophthalate units is used as polyester copolymer for the outer layer A.

**12.** The polyester film as claimed in one or more of claims 1 to 11, wherein the adhesion between the outer layer A and the base layer B is greater than 0.5 N/25 mm.

**13.** The polyester film as claimed in one or more of claims 1 to 12, which has an ABC layer structure, the outer layers A and C being identical or different.

**14.** The polyester film as claimed in one or more of claims 1 to 13, which has a haze of less than 20%.

**15.** The polyester film as claimed in one or more of claims 1 to 14, wherein the base layers and/or the outer layers comprise additional additives, such as stabilizers and/or antiblocking agents.

**16.** A process for producing a polyester film as claimed in one or more of claims 1 to 15, comprising the steps of

a) producing the film by coextrusion, and shaping the melts to give flat melt films,

b) biaxially stretching the film, and

c) heat-setting the stretched film.

**17.** The use of a polyester film as claimed in one or more of claims 1 to 15 as a barrier film for water vapor, and for the packaging of foods and other consumable goods.

**Revendications**

**1.** Film polyester multicouche transparent et orienté biaxialement, lequel comprend une couche de base B, composée d'au moins 50 % en poids d'un polyester thermoplastique et au moins une couche de couverture A, **caractérisé en ce que**

a) la couche de base B contient un copolymère cyclooléfinique (COC) à raison de 0 à 30 % en poids,
b) la couche de couverture A contient un copolymère cyclooléfinique (COC) à raison de 20 à 100 % en poids,
c) la température de transition vitreuse $T_g$ du copolymère cyclooléfinique (COC) est inférieure à 120°C et,
d) le coefficient de perméation pour la vapeur d'eau du film est inférieur à 35 g · [12 µm] / $m^2$ · d.

**2.** Film polyester selon la revendication 1, **caractérisé en ce que** la couche de base B contient le COC à raison de 2 à 25 % en poids, de préférence à raison de 5 à 20 % en poids.

**3.** Film polyester selon la revendication 1 ou 2, **caractérisé en ce que** la couche de couverture A contient le COC à raison de 25 à 95 % en poids, de préférence à raison de 30 à 90 % en poids.

**4.** Film polyester selon l'une quelconque des revendications 1 à 3, **caractérisé en ce que** la température de transition vitreuse du COC est inférieure à 100°C, de préférence inférieure à 80°C.

**5.** Film polyester selon l'une quelconque des revendication 1 à 4, **caractérisé en ce que** le COC contient au moins une cyclooléfine et au moins une oléfine acyclique à titre de monomère.

**6.** Film polyester selon l'une quelconque des revendications 1 à 5, **caractérisé en ce que** le COC contient à titre de monomère cyclooléfinique du norbornène et/ou tétra-cyclododécène et à titre de co-monomère acyclique, de l'éthylène, propylène et/ou butylène.

**7.** Film polyester selon l'une quelconque des revendications 1 à 6, **caractérisé en ce que** des homo-polymères ou co-polymères de polyester sont utilisés à titre de polyester thermoplastique de la couche de base B.

**8.** Film polyester selon l'une quelconque des revendications 1 à 7, **caractérisé en ce que** du polyéthylène téréphtalate et/ou du polyéthylène-2,6-naphtalate est utilisé à titre de polyester thermoplastique de la couche de base B.

**9.** Film polyester selon quelconque des revendications 1 à 8, **caractérisé en ce que** la couche de couverture A contient outre le COC un homo- et/ou un co-polymère de polyester.

**10.** Film polyester selon l'une quelconque des revendications 1 et 9, **caractérisé en ce que** du polyéthylène téréphtalate et du polyéthylène-2,6-naphatlate est utilisé à titre de homopolymère de polyester de la couche de couverture A.

**11.** Film polyester selon l'une quelconque des revendications 1 à 10, **caractérisé en ce que** un copolymère composé d'unités éthylène téréphtalate et éthylène isophtalate est utilisé à titre de co-polymère polyester pour la couche de couverture A.

**12.** Film polyester selon l'une quelconque selon l'une des revendications 1 à 11, **caractérisé en ce que** l'adhésion entre la couche de couverture A et la couche de base B est supérieure à 0,5 N / 25mm.

**13.** Film polyester selon l'une quelconque des revendications 1 à 12, **caractérisé en ce qu'**il présente une structure de couches A, B, C, la couche de couverture A et C étant égale ou différente.

**14.** Film polyester selon l'une quelconque des revendications 1 à 13, **caractérisé en ce qu'**il présente une turbidité inférieure à 20 %.

**15.** Film polyester selon l'une quelconque des revendications 1 à 14, **caractérisé en ce que** les couches de base et/ou de couverture contiennent en outre des additifs tels que des stabilisants et/ou des agents anti-blocages.

**16.** Procédé de préparation d'un film polyester selon l'une quelconque des revendications 1 à 15 comprenant les étapes consistant à :

a) préparer le film par coextrusion et formage des matières en fusion en film en fusion plats,
b) étirer de manière biaxiale le film, et
c) thermofixer le film étiré.

**17.** Utilisation d'un film polyester selon l'une quelconque des revendications 1 à 15 à titre de film barrière pour la vapeur d'eau et pour l'emballage d'aliments et de denrées de luxe.